# FASCICULE DE BREVET EUROPEEN

(11) **EP 3 648 973 B1**
(45) Date de publication et mention de la délivrance du brevet: **05.05.2021**
(21) Numéro de dépôt: 18765688.9
(22) Date de dépôt: 06.07.2018
(51) Int. Cl.: B32B 17/10, B64C 1/14, B64D 45/02

(54) **SUPPRESSION DU BRUIT DE DECHARGE ELECTROSTATIQUE PAR DECHARGE PRECOCE D'UN ELEMENT METALLIQUE EN GRADIN**
UNTERDRÜCKUNG DES ELEKTROSTATISCHEN ENTLADUNGSGERÄUSCHS DURCH FRÜHZEITIGE ENTLADUNG EINES GESTAFFELTEN METALLISCHEN ELEMENTS
ELECTROSTATIC DISCHARGE NOISE SUPPRESSION BY EARLY DISCHARGE OF A TIERED METALLIC ELEMENT

(30) Priorité: 06.07.2017 FR 1700721
(43) Date de publication de la demande: 13.05.2020
(73) Titulaire: SAINT-GOBAIN GLASS FRANCE, 92400 Courbevoie (FR)
(72) Inventeur: DEBRUS, Marie-Hélène, 45570 Dampierre en Burly (FR); TONDU, Thomas, 45600 Sully (FR)
(74) Mandataire: Saint-Gobain Recherche
(86) Numéro de dépôt international: PCT/FR2018/051698
(87) Numéro de publication internationale: WO 2019/008291

(56) Documents cités:
- EP-A2- 0 376 190
- FR-A1- 2 888 082
- US-A- 3 953 630
- US-A1- 2013 026 296
- DATABASE WPI Week 200101 13 octobre 2000 (2000-10-13) Thomson Scientific, London, GB; AN 2001-003055 XP002778125, -& JP 2000 286591 A (ASAHI GLASS CO LTD) 13 octobre 2000 (2000-10-13)

## Description

Les vitrages de cockpits aéronautiques sont des assemblages de verres minéraux et/ou organiques assemblés par feuilletage avec des couches adhésives intercalaires. La pénétration d'eau par diffusion à travers les couches adhésives intercalaires peut engendrer des défaillances du vitrage feuilleté, par exemple en favorisant le délaminage ou en dégradant les systèmes électriques intégrés au vitrage.

Une parade répandue à la pénétration d'humidité dans les couches adhésives intercalaires de feuilletage consiste en l'application périphérique d'un élément métallique conforme à une zone périphérique du vitrage feuilleté, notamment d'un élément métallique en gradin comme il sera vu par la suite, élément métallique communément appelé « Zed » du fait de la forme de cette ceinture.

Ce zed est collé aux feuilles de verre du vitrage feuilleté et peut être couvert par un joint d'étanchéité à l'air et à l'eau, tel qu'en silicone ou équivalent, ainsi que par une « goutte » (joint externe) procurant de bonnes propriétés de durabilité et d'aérodynamique. Ce joint externe est en polysulfure ou équivalent.

Le zed métallique se trouve donc au sein de silicone et polysulfure, électriquement isolé des éléments électriques internes du vitrage feuilleté et de sa structure de montage. Il est électriquement flottant, susceptible de porter des charges électrostatiques. Il peut se charger dans certaines conditions de vol à des potentiels sensiblement différents de ceux de la structure avion. Les modes de chargement du zed sont typiquement les vols en environnement chargeant : charge triboélectrique par impact de particules de l'environnement telles que neige, glace, poussières, pollution. Alors que la structure avion est équipée de systèmes de décharge, les éléments tels que les vitrages, isolés électriquement, accumulent les charges.

En particulier, les charges collectées par le vitrage peuvent être en partie drainées jusqu'au zed. Des potentiels permettant des décharges électrostatiques entre zed et structure avion (ou systèmes électriques intégrés au vitrage) peuvent être atteints.

Ceci peut se manifester par
- une signature sonore perturbant le pilote ;
- une signature lumineuse (flash, étincelles) perturbant le pilote ;
- une signature électromagnétique perturbant les équipements de l'avion.

Le document US 2013/026296 A1 décrit un vitrage feuilleté de cockpit d'avion, muni d'un film de protection électromagnétique destiné à empêcher le bruit électromagnétique. Le bord de ce vitrage feuilleté présente un contour continu en gradin et un élément en gradin en un matériau non conducteur. Le document décrit un presse glace solidaire de la structure de montage du vitrage feuilleté et en contact avec celui-ci dans le volume décrit par le contour continu en gradin de manière à retenir le vitrage feuilleté solidaire de sa structure de montage.

Le document FR 2 888 082 A1 décrit des vitrages feuilletés chauffants pour cockpits d'avion. Le bord de ce vitrage feuilleté présente un contour continu en gradin et un élément métallique en gradin. Le presse glace n'a pas une forme complémentaire de celle du contour continu en gradin, et aucun conducteur électrique n'a une première extrémité reliée électriquement à l'élément métallique en gradin et une seconde extrémité en pointe, à une distance non nulle au plus égale à 1 mm du presse glace.

L'invention a pour but de maintenir la différence de potentiel entre zed et structure de montage d'un vitrage feuilleté (structure avion...) à un niveau suffisamment faible, c'est-à-dire de prévenir l'apparition des potentiels de décharge élevés, en favorisant l'apparition de décharges électrostatiques précoces (de faible énergie) et localisées de façon à être inaudibles.

Ce but est atteint par l'invention qui, en conséquence, a pour objet un vitrage feuilleté comprenant au moins une première feuille de verre constituant une face extérieure du vitrage, reliée à une seconde feuille de verre par une première couche adhésive intercalaire, dans lequel le bord de la première feuille de verre est en retrait par rapport à celui de la seconde, une partie périphérique de la surface libre de la première feuille de verre, le chant de cette dernière, le chant de la première couche adhésive intercalaire et une partie de la surface de la seconde feuille de verre débordant de la première feuille de verre décrivant un contour continu en gradin qui est recouvert par un élément métallique en gradin avec interposition d'un joint externe, l'élément métallique en gradin étant recouvert par un joint d'étanchéité à l'air et à l'eau, un presse glace solidaire de la structure de montage du vitrage feuilleté et de forme sensiblement complémentaire de celle du contour continu en gradin étant en contact avec le vitrage feuilleté dans le volume décrit par le contour continu en gradin, de manière à retenir le vitrage feuilleté solidaire de sa structure de montage, caractérisé en ce qu'un conducteur électrique a une première extrémité reliée électriquement à l'élément métallique en gradin et une seconde extrémité en pointe, à une distance non nulle au plus égale à 1 mm du presse glace.

Comme déjà indiqué, l'élément métallique en gradin empêche la pénétration d'humidité dans les couches adhésives intercalaires de feuilletage. Il peut être en aluminium, inox ou autre métal, peut être indifféremment appelé « zed » dans la suite.

Les mesures techniques de l'invention assurent un seuil de claquage au plus égal à 1000 V.

Selon des caractéristiques préférées du vitrage feuilleté de l'invention :
- le conducteur électrique a, dans la zone de sa seconde extrémité, une direction sensiblement perpendiculaire à une surface du presse glace ;
- le conducteur électrique comprend un fil métallique de diamètre compris entre 20 et 50 µm ; il peut être en cuivre, aluminium, tungstène ou autre ;
- le conducteur électrique comprend un fil de raideur suffisante, tel qu'en tungstène, pour garantir l'orientation de sa seconde extrémité (par rapport à la surface du presse glace); cette raideur peut être également de nature à garantir l'orientation du conducteur électrique sur toute sa longueur, y compris pendant la formation du joint externe et du joint d'étanchéité décrits ci-dessous, afin de garantir le positionnement relatif du conducteur électrique et de l'élément métallique en gradins ; ces trois premières caractéristiques préférées du vitrage feuilleté de l'invention sont de nature à permettre l'amorçage d'un arc électrique entre le conducteur électrique et la structure avion (presse glace) ;
- le conducteur électrique comprend un fil métallique monobrin ou multibrin tissé, tel qu'en tresse ou grille ;
- le vitrage feuilleté comprend au moins une troisième feuille de verre reliée à la seconde feuille de verre par une seconde couche adhésive intercalaire ;
- une partie du joint externe est rabattue au-dessus de l'élément métallique en gradin de manière à procurer au vitrage feuilleté de bonnes propriétés de durabilité et d'aérodynamique ; le joint externe est en polysulfure ou équivalent ;
- le joint d'étanchéité à l'air et à l'eau est en silicone ou équivalent
- le conducteur électrique est en contact sur l'élément métallique en gradin ; ou bien autrement,
- le conducteur électrique est noyé dans le joint externe, constitué d'un matériau suffisamment électroconducteur, tel que polysulfure ; distant de l'élément métallique en gradin, il lui est cependant ainsi relié électriquement par la conduction électrique du joint externe ; le conducteur électrique peut alors être mis en place au moment de la formation du joint externe sur le zed ;
- le conducteur électrique est émergeant ou affleurant par rapport au joint externe et le cas échéant au joint d'étanchéité ;
- la première feuille de verre est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm ;
- la seconde feuille de verre, et le cas échéant la troisième feuille de verre, voire les suivantes sont en verre minéral d'épaisseur comprise entre 5 et 10 mm, ou en matériau polymère tel que poly(méthacrylate de méthyle) (PMMA) d'épaisseur comprise entre 5 et 30, de préférence au plus 20 mm ; ces feuilles de verre sont appelés « plis structuraux » ;
- les couches adhésives intercalaires sont en polyuréthane (PU), polyvinylbutyral (PVB), éthylène - acétate de vinyle (EVA) ou équivalent, l'épaisseur de la première couche adhésive intercalaire est comprise entre 3 et 10, de préférence 4 et 8 mm, et l'épaisseur de la seconde couche adhésive intercalaire et le cas échéant des suivantes est comprise entre 0,5 et 4, de préférence au plus égale à 2 mm.

Un autre objet de l'invention consiste en l'application d'un vitrage feuilleté décrit ci-dessus comme vitrage de bâtiment, de véhicule terrestre, aérien ou aquatique, ou pour le mobilier urbain, en particulier comme vitrage de cockpit de véhicule aérien. Les cockpits d'avions peuvent comporter deux vitrages frontaux et deux à quatre latéraux.

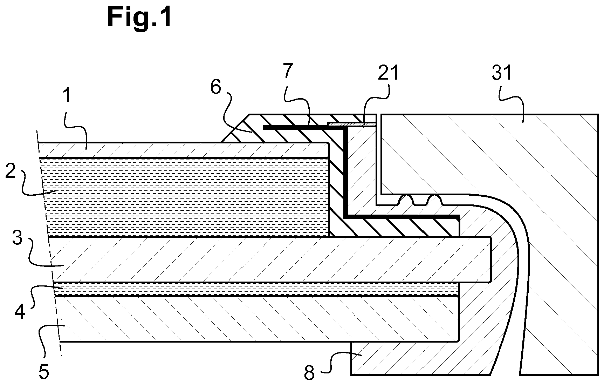

L'invention sera mieux comprise à la lumière de la description qui suit du dessin annexé. La Figure 1 est une représentation schématique d'un vitrage feuilleté selon l'invention.

Dans cet exemple, une feuille de verre désigne une feuille de verre aluminosilicate trempée chimique, commercialisée par la Société Saint-Gobain Sully sous la marque enregistrée Solidion®.

En référence à la Figure 1, un vitrage feuilleté comprend une première feuille de verre 1 constituant une face extérieure du vitrage, de 3 mm d'épaisseur, collée à une seconde feuille de verre 3 de 8 mm d'épaisseur par une première couche adhésive intercalaire 2 de polyvinylbutyral (PVB) de 5,3 mm d'épaisseur.

Une troisième feuille de verre 5 de 8 mm d'épaisseur est collée à la seconde 3 par une seconde couche adhésive intercalaire 4 de polyvinylbutyral (PVB) de 2 mm d'épaisseur.

Le bord de la première feuille de verre 1 est en retrait par rapport à celui de la seconde 3, une partie périphérique de la surface libre de la première feuille de verre 1, le chant de cette dernière 1, le chant de la première couche adhésive intercalaire 2 et une partie de la surface de la seconde feuille de verre 3 débordant de la première feuille de verre 1 décrivant un contour continu en gradin qui est recouvert par un élément métallique en gradin 7 en aluminium.

Ledit contour continu en gradin est recouvert par l'élément métallique en gradin 7 avec interposition d'un joint externe 6 en polysulfure, dont une partie est rabattue au-dessus de l'élément métallique en gradin 7 de manière à procurer au vitrage feuilleté de bonnes propriétés de durabilité et d'aérodynamique.

L'élément métallique en gradin 7 est recouvert par un joint 8 d'étanchéité à l'air et à l'eau, en silicone.

Le vitrage feuilleté représenté sur la Figure 1 peut être installé par l'extérieur d'une structure de montage du vitrage feuilleté, par boulonnage sur la structure de montage d'un presse glace 31 recouvrant le vitrage feuilleté; ce boulonnage peut produire un pincement du vitrage feuilleté ou pas, le vitrage feuilleté pouvant être aussi collé au presse glace 31, et dans tous les cas maintenu durablement solidaire de la structure de montage. Le presse glace 31 est un encadrement rapporté par l'extérieur.

Un montage par l'intérieur est aussi possible. Dans ce cas, la forme du presse glace mentionné précédemment est existante mais fait partie intégrante de la structure de montage, et on vient rapporter un encadrement (presse glace) depuis l'intérieur. Boulonnage du presse glace intérieur et collage du vitrage feuilleté peuvent être associés, avec ou sans pincement du vitrage feuilleté.

En référence à la Figure 1, un conducteur électrique 21 a été posé sur l'élément métallique en gradin 7 au moment de la formation du joint externe 6 (goutte). Le joint d'étanchéité 8 a été formé ensuite, de sorte que le conducteur électrique 21 est à l'interface entre le joint externe 6 et le joint d'étanchéité 8. Le conducteur électrique 21 est affleurant par rapport au joint externe 6 et au joint d'étanchéité 8 ; la distance de sa seconde extrémité à la surface du presse glace 31 est d'1 mm au plus. Il pourrait tout aussi bien être émergeant, en saillie par rapport au joint externe 6 et au joint d'étanchéité 8, la distance de sa seconde extrémité à la surface du presse glace 31 étant également d'1 mm au plus. Le conducteur électrique 21 définit, notamment dans sa zone proche du presse glace 31, une direction sensiblement perpendiculaire à la surface de celui-ci 31.

Aucune décharge intempestive du zed, aucun bruit perturbant signalant cette décharge, ne sont observés sur les vitrages conformes à l'invention.

## Revendications

1. Vitrage feuilleté comprenant au moins une première feuille de verre (1) constituant une face extérieure du vitrage, reliée à une seconde feuille de verre (3) par une première couche adhésive intercalaire (2), dans lequel le bord de la première feuille de verre (1) est en retrait par rapport à celui de la seconde (3), une partie périphérique de la surface libre de la première feuille de verre (1), le chant de cette dernière (1), le chant de la première couche adhésive intercalaire (2) et une partie de la surface de la seconde feuille de verre (3) débordant de la première feuille de verre (1) décrivant un contour continu en gradin qui est recouvert par un élément métallique en gradin (7) avec interposition d'un joint externe (6), l'élément métallique en gradin (7) étant recouvert par un joint (8) d'étanchéité à l'air et à l'eau, un presse glace (31) solidaire de la structure de montage du vitrage feuilleté et de forme sensiblement complémentaire de celle du contour continu en gradin étant en contact avec le vitrage feuilleté dans le volume décrit par le contour continu en gradin, de manière à retenir le vitrage feuilleté solidaire de sa structure de montage, **caractérisé en ce qu'**un conducteur électrique (21) a une première extrémité reliée électriquement à l'élément métallique en gradin (7) et une seconde extrémité en pointe, à une distance non nulle au plus égale à 1 mm du presse glace (31).

2. Vitrage feuilleté selon la revendication 1, **caractérisé en ce que** le conducteur électrique (21) a, dans la zone de sa seconde extrémité, une direction sensiblement perpendiculaire à une surface du presse glace (31).

3. Vitrage feuilleté selon l'une des revendications précédentes, **caractérisé en ce que** le conducteur électrique (21) comprend un fil métallique de diamètre compris entre 20 et 50 µm.

4. Vitrage feuilleté selon la revendication 3, **caractérisé en ce que** le conducteur électrique (21) comprend un fil de raideur suffisante, tel qu'en tungstène, pour garantir l'orientation de sa seconde extrémité.

5. Vitrage feuilleté selon l'une des revendications précédentes, **caractérisé en ce que** le conducteur électrique (21) comprend un fil métallique monobrin ou multibrin tissé, tel qu'en tresse ou grille.

6. Vitrage feuilleté selon l'une des revendications précédentes, **caractérisé en ce qu'**il comprend au moins une troisième feuille de verre (5) reliée à la seconde feuille de verre (3) par une seconde couche adhésive intercalaire (4).

7. Vitrage feuilleté selon l'une des revendications précédentes, **caractérisé en ce qu'**une partie du joint externe (6) est rabattue au-dessus de l'élément métallique en gradin (7) de manière à procurer au vitrage feuilleté de bonnes propriétés de durabilité et d'aérodynamique.

8. Vitrage feuilleté selon la revendication 1, **caractérisé en ce que** le conducteur électrique (21) est en contact sur l'élément métallique en gradin (7).

9. Vitrage feuilleté selon la revendication 1, **caractérisé en ce que** le conducteur électrique (21) est noyé dans le joint externe (6), constitué d'un matériau suffisamment électroconducteur, tel que polysulfure.

10. Vitrage feuilleté selon la revendication 1, **caractérisé en ce que** le conducteur électrique (21) est émergeant ou affleurant par rapport au joint externe (6) et le cas échéant au joint d'étanchéité (8).

11. Vitrage feuilleté selon l'une des revendications précédentes, **caractérisé en ce que** la première feuille de verre (1) est en verre minéral d'épaisseur comprise entre 0,5 et 5, de préférence entre 2 et 4 mm, ou en matériau polymère tel que poly(méthacrylate de méthyle) (PMMA) d'épaisseur comprise entre 0,5 et 5 mm.

12. Vitrage feuilleté selon l'une des revendications précédentes, **caractérisé en ce que** la seconde feuille de verre (3), et le cas échéant la troisième feuille de verre (5), voire les suivantes sont en verre minéral d'épaisseur comprise entre 5 et 10 mm, ou en matériau polymère tel que poly(méthacrylate de méthyle) (PMMA) d'épaisseur comprise entre 5 et 30, de préférence au plus 20 mm.

13. Vitrage feuilleté selon l'une des revendications précédentes, **caractérisé en ce que** les couches adhésives intercalaires (2 ; 4) sont en polyuréthane (PU), polyvinylbutyral (PVB), éthylène - acétate de vinyle (EVA) ou équivalent, **en ce que** l'épaisseur de la première couche adhésive intercalaire (2) est comprise entre 3 et 10, de préférence 4 et 8 mm, et **en ce que** l'épaisseur de la seconde couche adhésive intercalaire (4) et le cas échéant des suivantes est comprise entre 0,5 et 4, de préférence au plus égale à 2 mm.

14. Application d'un vitrage feuilleté selon l'une des revendications 1 à 13 comme vitrage de bâtiment, de véhicule terrestre, aérien ou aquatique, ou pour le mobilier urbain.

15. Application selon la revendication 14 comme vitrage de cockpit de véhicule aérien.

## Patentansprüche

1. Verbundverglasung, umfassend mindestens eine erste Glasscheibe (1), die eine Außenfläche der Verglasung bildet, die mit einer zweiten Glasscheibe (3) durch eine erste Klebstoffzwischenschicht (2) verbunden ist, in der der Rand der ersten Glasscheibe (1) in Bezug auf den der zweiten (3) zurückgesetzt ist, wobei ein peripherer Teil der freien Oberfläche der ersten Glasscheibe (1), die Kante der letzteren (1), die Kante der ersten Klebstoffzwischenschicht (2) und ein Teil der Oberfläche der zweiten Glasscheibe (3), der von der ersten Glasscheibe (1) hervorsteht, eine gestaffelte durchgehende Kontur beschreiben, die von einem gestaffelten metallischen Element (7) unter Zwischenfügung einer Außendichtung (6) bedeckt ist, wobei das gestaffelte metallische Element (7) von einer Abdichtung (8) gegen Luft und Wasser bedeckt ist, wobei eine Plattenhalterung (31), die fest mit der Montagestruktur der Verbundverglasung verbunden und im Wesentlichen komplementär zu der der gestaffelten durchgehenden Kontur ist, mit der Verbundverglasung in dem durch die gestaffelte durchgehende Kontur beschriebenen Ausmaß in Kontakt steht, so dass die Verbundverglasung mit ihrer Montagestruktur fest verbunden bleibt, **dadurch gekennzeichnet, dass** ein elektrischer Leiter (21) ein erstes Ende, das mit dem gestaffelten metallischen Element (7) elektrisch verbunden ist, und ein zweites spitzes Ende in einem Abstand ungleich Null bis höchstens gleich 1 mm von der Plattenhalterung (31) aufweist.

2. Verbundverglasung nach Anspruch 1, **dadurch gekennzeichnet, dass** der elektrische Leiter (21) im Bereich seines zweiten Endes eine Richtung aufweist, die im Wesentlichen senkrecht zu einer Oberfläche der Plattenhalterung (31) verläuft.

3. Verbundverglasung nach einem der vorstehenden Ansprüche, **dadurch gekennzeichnet, dass** der elektrische Leiter (21) einen Metalldraht mit einem Durchmesser zwischen 20 und 50 µm umfasst.

4. Verbundverglasung nach Anspruch 3, **dadurch gekennzeichnet, dass** der elektrische Leiter (21) einen Draht mit ausreichender Steifigkeit, beispielsweise aus Wolfram, umfasst, um die Ausrichtung seines zweiten Endes zu gewährleisten.

5. Verbundverglasung nach einem der vorstehenden Ansprüche, **dadurch gekennzeichnet, dass** der elektrische Leiter (21) einen ein- oder mehradrigen gewebten, beispielsweise geflochtenen oder gitterförmigen, Metalldraht umfasst.

6. Verbundverglasung nach einem der vorstehenden Ansprüche, **dadurch gekennzeichnet, dass** sie mindestens eine dritte Glasscheibe (5) umfasst, die mit der zweiten Glasscheibe (3) durch eine zweite Klebstoffzwischenschicht (4) verbunden ist.

7. Verbundverglasung nach einem der vorstehenden Ansprüche, **dadurch gekennzeichnet, dass** ein Teil der Außendichtung (6) über das gestaffelte metallische Element (7) geklappt ist, um der Verbundverglasung gute Haltbarkeits- und Aerodynamikeigenschaften zu verleihen.

8. Verbundverglasung nach Anspruch 1, **dadurch gekennzeichnet, dass** der elektrische Leiter (21) auf dem gestaffelten metallischen Element (7) kontaktiert ist.

9. Verbundverglasung nach Anspruch 1, **dadurch gekennzeichnet, dass** der elektrische Leiter (21) in die Außendichtung (6) eingelassen ist, die aus einem ausreichend elektrisch leitfähigen Material, beispielsweise Polysulfid, besteht.

10. Verbundverglasung nach Anspruch 1, **dadurch gekennzeichnet, dass** der elektrische Leiter (21) in Bezug auf die Außendichtung (6) und gegebenenfalls die Abdichtung (8) herausragt oder bündig ist.

11. Verbundverglasung nach einem der vorstehenden Ansprüche, **dadurch gekennzeichnet, dass** die erste Glasscheibe (1) aus Mineralglas mit einer Dicke zwischen 0,5 und 5, vorzugsweise zwischen 2 und 4 mm, oder aus einem Polymermaterial wie Poly(methylmethacrylat) (PMMA) mit einer Dicke zwischen 0,5 und 5 mm besteht.

12. Verbundverglasung nach einem der vorstehenden Ansprüche, **dadurch gekennzeichnet, dass** die zweite Glasscheibe (3) und gegebenenfalls die dritte Glasscheibe (5), sogar die noch folgenden, aus Mineralglas mit einer Dicke zwischen 5 und 10 mm oder aus einem Polymermaterial wie Poly(methylmethacrylat) (PMMA) mit einer Dicke zwischen 5 und 30, vorzugsweise höchstens 20 mm, bestehen.

13. Verbundverglasung nach einem der vorstehenden Ansprüche, **dadurch gekennzeichnet, dass** die Klebstoffzwischenschichten (2; 4) aus Polyurethan (PU), Polyvinylbutyral (PVB), Ethylen-Vinylacetat (EVA) oder dergleichen bestehen, **dass** die Dicke der ersten Klebstoffzwischenschicht (2) zwischen 3 und 10, vorzugsweise 4 und 8 mm beträgt, und **dass** die Dicke der zweiten Klebstoffzwischenschicht (4) und gegebenenfalls der folgenden zwischen 0,5 und 4, vorzugsweise höchstens gleich 2 mm beträgt.

14. Verwendung von einer Verbundverglasung nach einem der Ansprüche 1 bis 13 als Verglasung für Gebäude, Land-, Luft- oder Wasserfahrzeuge oder für Stadtmobiliar.

15. Verwendung nach Anspruch 14 als Cockpitverglasung für ein Luftfahrzeug.

## Claims

1. A laminated glazing comprising at least a first glass sheet (1) forming an exterior face of the glazing, which first sheet is linked to a second glass sheet (3) by a first interlayer adhesive layer (2), wherein the edge of the first glass sheet (1) is set back with respect to that of the second (3), a peripheral portion of the free surface of the first glass sheet (1), the edge of this glass sheet (1), the edge of the first interlayer adhesive layer (2) and a portion of the surface of the second glass sheet (3) extending beyond the first glass sheet (1) describing a continuous stepped contour which is covered by a stepped metal element (7) with the interposition of an external seal (6), the stepped metal element (7) being covered by an air- and watertight seal (8), a window press (31) that is rigidly connected to the structure for mounting the laminated glazing and the shape of which is substantially complementary to that of the continuous stepped contour making contact with the laminated glazing in the volume described by the continuous stepped contour, so as to hold the laminated glazing secure to its mounting structure, **characterized in that** an electrical conductor (21) has a first end that is electrically linked to the stepped metal element (7) and a second tapered end at a non-zero distance at most equal to 1 mm from the window press (31).

2. The laminated glazing according to claim 1, **characterized in that** the electrical conductor (21) has, in the zone of its second end, a direction that is substantially perpendicular to a surface of the window press (31).

3. The laminated glazing according to one of the preceding claims, **characterized in that** the electrical conductor (21) comprises a metal wire having a diameter that is comprised between 20 and 50 µm.

4. The laminated glazing according to claim 3, **characterized in that** the electrical conductor (21) comprises a wire, such as one made of tungsten, that is stiff enough to ensure the orientation of its second end.

5. The laminated glazing according to one of the preceding claims, **characterized in that** the electrical conductor (21) comprises a single-stranded metal wire or a woven multistranded metal wire, such as a braided or grid-like conductor.

6. The laminated glazing according to one of the preceding claims, **characterized in that** it comprises at least a third glass sheet (5) that is linked to the second glass sheet (3) by a second interlayer adhesive layer (4).

7. The laminated glazing according to one of the preceding claims, **characterized in that** a portion of the external seal (6) is folded over the stepped metal element (7) so as to afford the laminated glazing good durability and aerodynamic properties.

8. The laminated glazing according to claim 1, **characterized in that** the electrical conductor (21) is in contact with the stepped metal element (7).

9. The laminated glazing according to claim 1, **characterized in that** the electrical conductor (21) is embedded in the external seal (6), which consists of a sufficiently electrically conductive material, such as polysulfide.

10. The laminated glazing according to claim 1, **characterized in that** the electrical conductor (21) protrudes or is flush with respect to the external seal (6) and, if applicable, to the leaktight seal (8).

11. The laminated glazing according to one of the preceding claims, **characterized in that** the first glass sheet (1) is made of a mineral glass with a thickness of between 0.5 and 5, preferably between 2 and 4 mm, or made of a polymer material such as poly(methyl methacrylate) (PMMA) with a thickness of between 0.5 and 5 mm.

12. The laminated glazing according to one of the preceding claims, **characterized in that** the second glass sheet (3) and, if applicable, the third glass sheet (5) and so on are made of a mineral glass with a thickness of between 5 and 10 mm, or made of a polymer material such as poly(methyl methacrylate) (PMMA) with a thickness of between 5 and 30, preferably at most 20 mm.

13. The laminated glazing according to one of the preceding claims, **characterized in that** the interlayer adhesive layers (2; 4) are made of polyurethane (PU), polyvinyl butyral (PVB), ethylene/vinyl acetate (EVA) or equivalent, **in that** the thickness of the first interlayer adhesive layer (2) is between 3 and 10, preferably 4 and 8 mm, and **in that** the thickness of the second interlayer adhesive layer (4) and, if applicable, of the following layers is between 0.5 and 4, preferably at most equal to 2 mm.

14. The use of a laminated glazing according to one of claims 1 to 13 as building glazing, ground, air or water vehicle glazing, or glazing for street furniture.

15. The use according to claim 14 as aircraft cockpit glazing.
